# NEUE EUROPÄISCHE PATENTSCHRIFT

(11) **EP 3 590 011 B2**
(45) Veröffentlichungstag und Bekanntmachung des Hinweises auf die Entscheidung über den Einspruch: **12.06.2024**
(45) Hinweis auf die Patenterteilung: 31.03.2021
(21) Anmeldenummer: 18707251.7
(22) Anmeldetag: 06.02.2018
(51) Int. Cl.: G05B 13/02

(54) **VERFAHREN UND STEUEREINRICHTUNG ZUM STEUERN EINES TECHNISCHEN SYSTEMS**
METHOD AND CONTROL DEVICE FOR CONTROLLING A TECHNICAL SYSTEM
PROCÉDÉ ET DISPOSITIF DE COMMANDE POUR COMMANDER UN SYSTÈME TECHNIQUE

(30) Priorität: 04.04.2017 DE 102017205713
(43) Veröffentlichungstag der Anmeldung: 08.01.2020
(73) Patentinhaber: Siemens Aktiengesellschaft, 80333 München (DE)
(72) Erfinder: GEIPEL, Markus Michael, 80799 München (DE); HENTSCHEL, Alexander, V6H 1V4, Vancouver, BC (CA)
(74) Vertreter: Siemens Patent Attorneys
(86) Internationale Anmeldenummer: PCT/EP2018/052918
(87) Internationale Veröffentlichungsnummer: WO 2018/184754

(56) Entgegenhaltungen:
- EP-A1- 0 712 060
- US-A1- 2016 147 201

## Beschreibung

Bei der Steuerung komplexer technischer Systeme, wie zum Beispiel Windturbinen, Gasturbinen, Fertigungsanlagen, Kraftfahrzeugen oder Stromnetzen ist es in der Regel wünschenswert, ein Verhalten, eine Wirkung und/oder eine Ausbeute des technischen Systems zumindest kurzfristig vorherzusagen, das heißt zu prädizieren, um die Steuerung des technischen Systems hinsichtlich vorgegebener Kriterien zu optimieren.

So kann zum Beispiel eine Turbine dadurch überwacht werden, dass an der Turbine gemessene Betriebsparameter mit Werten verglichen werden, die für eine funktionsfähige Turbine unter den gleichen Arbeitsbedingungen vorhergesagt werden. Bei einer Abweichung können dann rechtzeitig geeignete Gegenmaßnahmen ergriffen werden. Weiterhin können Auswirkungen verschiedener Steuermaßnahmen prädiziert werden, um dann diejenige Steuermaßnahme tatsächlich anzuwenden, die ein Systemverhalten optimiert.

Zur Prädiktion von Betriebsparametern verwenden zeitgemäße Steuerungen häufig Steuermodelle, die auf Techniken des maschinellen Lernens basieren. Für eine hinreichend genaue Prädiktion eines Systemverhaltens sind jedoch häufig längere Zeitreihen einer Vielzahl von Betriebsparametern vorzugsweise in Echtzeit auszuwerten. Bei komplexen technischen Systemen können so ohne Weiteres mehrere tausend individuelle Betriebsparameterwerte für eine Prädiktion zu berücksichtigen sein.

Zur effizienten Auswertung solcher Zeitreihendaten werden diese häufig einer Vorverarbeitung unterzogen, um für die Prädiktion relevante Datenmuster spezifisch zu extrahieren und die Datenmenge auf diese Weise zu reduzieren. Eine solche Vorverarbeitung ist allerdings in der Regel von einem Experten spezifisch zu konzipieren und mit entsprechend hohem Zeitaufwand verbunden.

Nicht vorverarbeitete Zeitreihen werden häufig mittels rekurrenter neuronaler Netze ausgewertet. Bei rekurrenten neuronalen Netzen verringert sich jedoch in der Regel bei längeren Zeitreihen ein Trainingserfolg EP712060 beschreibt ein Verfahren und eine Vorrichtung zur Erzeugung einer Mehrgrössen-/ nichtlinearen Steuerung.

Es ist Aufgabe der vorliegenden Erfindung, ein Verfahren und eine Steuereinrichtung zum Steuern eines technischen Systems anzugeben, die eine effizientere Prädiktion erlauben.

Gelöst wird diese Aufgabe durch ein Verfahren mit den Merkmalen des Patentanspruchs 1, durch eine Steuereinrichtung mit den Merkmalen des Patentanspruchs 8, durch ein Computerprogrammprodukt mit den Merkmalen des Patentanspruchs 9 sowie durch ein computerlesbares Speichermedium mit den Merkmalen des Anspruchs 10.

Zum Steuern eines technischen Systems, z.B. einer Gasturbine, einer Fertigungsanlage, eines Generators, eines Kompressors, eines Kraftfahrzeugs, eines Stromnetzes, einer Solaranlage oder einer anderen Anlage wird eine zeitliche Abfolge von Betriebsparameterwerten des technischen Systems fortlaufend erfasst und durch ein trainierbares digitales Filter fortlaufend in eine Abfolge von gefilterten Signalwerten umgesetzt. Die Abfolge der gefilterten Signalwerte wird einer maschinellen Lernroutine zugeführt, die daraus Prädiktionswerte für einen Ziel-Betriebsparameter ableitet. Das digitale Filter sowie die maschinelle Lernroutine werden darauf trainiert, einen Abstand zwischen abgeleiteten Prädiktionswerten und dazu zeitlich korrespondierenden, tatsächlich erfassten Werten des Ziel-Betriebsparameters zu verringern. Weiterhin werden die Prädiktionswerte zum Steuern des technischen Systems ausgegeben.

Zum Ausführen des erfindungsgemäßen Verfahrens sind eine Steuereinrichtung, ein Computerprogrammprodukt sowie ein computerlesbares Speichermedium vorgesehen.

Das erfindungsgemäße Verfahren sowie die erfindungsgemäße Steuereinrichtung können beispielsweise mittels einem oder mehrerer Prozessoren, anwendungsspezifischen integrierten Schaltungen (ASIC), digitalen Signalprozessoren (DSP) und/oder sogenannten "Field Programmable Gate Arrays" (FPGA) ausgeführt bzw. implementiert werden.

Ein Vorteil der Erfindung ist darin zu sehen, dass durch das Training einerseits das digitale Filter und andererseits die maschinelle Lernroutine aufeinander bezogen trainiert werden können. So kann einerseits das digitale Filter darauf trainiert werden, spezifische Betriebsparametermerkmale zu extrahieren, die für eine gute Prädiktion des Ziel-Betriebsparameters relevant sind, während andererseits die maschinelle Lernroutine darauf trainiert werden kann, den Ziel-Betriebsparameter anhand der extrahierten Betriebsparametermerkmale mit möglichst geringem Prädiktionsfehler vorherzusagen. Dies erlaubt in der Regel ein effizienteres Training und eine genauere und effizientere Prädiktion. Insbesondere können auch a priori noch unbekannte interne Systemwechselwirkungen häufig automatisiert erkannt und ausgewertet werden. Darüber hinaus skaliert eine Trainingseffizienz besser auf längere Abfolgen von Betriebsparameterwerten als z.B. bei einem rekurrenten neuronalen Netz.

Anhand der Prädiktionswerte kann das technische System in vorausschauender Weise gesteuert werden. Dabei kann ein Systemverhalten optimiert und ungünstigem Systemverhalten oft rechtzeitig gegengesteuert werden. Die Prädiktionswerte können insbesondere zur Überwachung des technischen Systems, zur Beschädigungserkennung, zur Verschleißerkennung, zur Abstimmung eines Ressourcenbedarfs auf ein Ressourcenangebot und/oder für andere vorausschauende Steuer- oder Planungsmaßnahmen verwendet werden.

Vorteilhafte Ausführungsformen und Weiterbildungen der Erfindung sind in den abhängigen Ansprüchen angegeben.

Vorzugsweise können die maschinelle Lernroutine und/oder das digitale Filter ein künstliches neuronales Netz, ein rekurrentes neuronales Netz, ein faltendes neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum umfassen. Insbesondere kann die maschinelle Lernroutine MLP-Schichten (MLP: Multi Layer Perceptron) umfassen.

Vorteilhafterweise können das digitale Filter und die maschinelle Lernroutine gemeinsam, vorzugsweise parallel trainiert werden. Auf diese Weise können eine spezifische Extraktion von prädiktionsrelevanten Betriebsparametermerkmalen durch das digitale Filter und eine Modellierung des Ziel-Betriebsparameters durch die maschinelle Lernroutine aufeinander bezogen optimiert werden.

Erfindungsgemäß erfolgt die Umsetzung durch das digitale Filter abhängig von Filterparametern, die durch das Training des digitalen Filters derart modifiziert werden, dass der Abstand verringert wird. Die Filterparameter können damit als Trainingsstruktur des digitalen Filters aufgefasst werden.

Bei der Umsetzung der Abfolge der Betriebsparameterwerte werden erfindungsgemäß gleitende, durch Filterparameter gewichtete Summen der Betriebsparameterwerte über ein Zeitfenster gebildet. Die Filterparameter können damit als Filtergewichte aufgefasst werden. Das Zeitfenster und seine Länge werden im Zuge des Trainings modifiziert.

Insbesondere können die gewichteten Summen durch eine Faltung der Abfolge der Betriebsparameterwerte mit einer Abfolge der Filterparameter und/oder durch ein gleitendes Skalarprodukt einer Abfolge der Betriebsparameterwerte mit der Abfolge der Filterparameter gebildet werden. Die Filterparameter können damit als Filterkern aufgefasst werden.

Gemäß einer besonders vorteilhaften Ausführungsform der Erfindung kann das digitale Filter eine oder mehrere faltende neuronale Schichten und/oder eine Pooling-Schicht zum Filtern der Abfolge der Betriebsparameterwerte aufweisen. Insbesondere können mehrere faltende neuronale Schichten hintereinandergeschaltet sein. Zwischen die faltenden neuronalen Schichten können eine oder mehrere Pooling-Schichten zwischengeschaltet sein. Faltende neuronale Schichten werden häufig auch als "Convolutional Layers" bezeichnet, ein damit implementiertes neuronales Netz als "Convolutional Neural Network". Die Trainingseffizienz faltender neuronaler Schichten skaliert besonders gut auf längere Abfolgen von Betriebsparameterwerten.

Nach einer weiteren Ausführungsform der Erfindung kann als Abstand ein statistischer Mittelwert von Einzelabständen jeweils zwischen einem Prädiktionswert und einem zeitlich dazu korrespondierenden, tatsächlich erfassten Wert des Ziel-Betriebsparameters verwendet werden. Auf diese Weise können stochastische Einflüsse auf den Ziel-Betriebsparameter in der Regel besser verarbeitet werden.

Erfindungsgemäß werden zum Erfassen der Abfolge der Betriebsparameterwerte Werteabfolgen mehrerer Betriebsparameter erfasst, die Werteabfolgen jeweils auf ein gemeinsames, vorgegebenes Zeitraster interpoliert und die auf das Zeitraster interpolierten Werteabfolgen zur Abfolge der Betriebsparameterwerte zusammengefasst. Eine solche Interpolation wird häufig auch als Resampling bezeichnet. Durch die Interpolation auf ein gemeinsames Zeitraster kann insbesondere die weitere Verarbeitung der Betriebsparameterwerte vereinheitlicht und vereinfacht werden.

Ein Ausführungsbeispiel der Erfindung wird nachfolgend anhand der Zeichnung näher erläutert. Dabei zeigen jeweils in schematischer Darstellung:
- Figur 1: eine Windturbine mit einer erfindungsgemäßen Steuereinrichtung und
- Figur 2: eine erfindungsgemäße Steuereinrichtung in detaillierterer Darstellung.

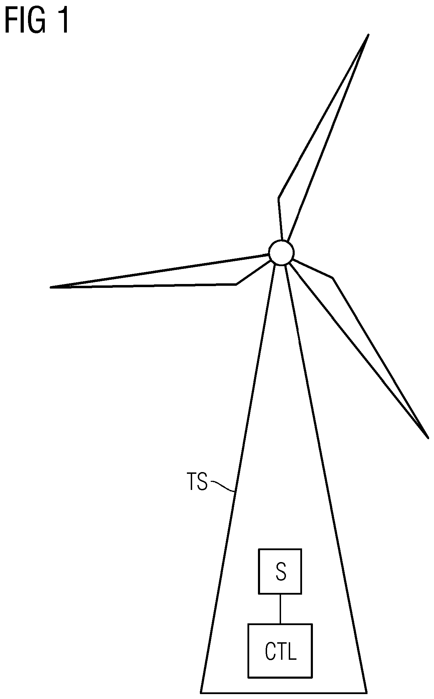

Figur 1 zeigt in schematischer Darstellung beispielhaft eine Windturbine als technisches System TS. Alternativ oder zusätzlich kann als technisches System TS auch eine Gasturbine, eine Fertigungsanlage, ein Generator, ein Kompressor, ein Kraftfahrzeug, ein Stromnetz, eine Solaranlage oder eine andere Anlage oder eine Kombination hiervon vorgesehen sein.

Die Windturbine TS verfügt über eine erfindungsgemäße Steuereinrichtung CTL, die als Teil des technischen Systems TS oder ganz oder teilweise extern zum technischen System TS implementiert sein kann. Die Steuereinrichtung CTL dient zum Steuern des technischen Systems TS. Unter einem Steuern des technischen Systems TS sei hierbei auch eine Ausgabe und Verwendung von steuerungsrelevanten, das heißt zum Steuern des technischen Systems TS beitragenden Daten und Steuersignalen verstanden. Derartige steuerungsrelevante Daten können insbesondere Prognosedaten, Analysedaten, Überwachungsdaten und/oder Klassifikationsdaten umfassen, die insbesondere zur Überwachung des technischen Systems TS und/oder zur Verschleiß- und/oder Beschädigungserkennung verwendet werden können.

Das technische System TS verfügt weiterhin über mit der Steuereinrichtung CTL gekoppelte Sensoren S, die fortlaufend eine Vielzahl von Betriebsparametern des technischen Systems TS messen und zur Steuereinrichtung CTL übermitteln. Ein jeweiliger Sensor S kann hierbei auch als Softsensor implementiert sein.

Neben den Sensordaten werden durch die Steuereinrichtung CTL noch weitere Betriebsparameter des technischen Systems TS erfasst. Als Betriebsparameter können hier und im Folgenden insbesondere physikalische, regelungstechnische, wirkungstechnische und/oder bauartbedingte Betriebsgrößen, Eigenschaften, Leistungsdaten, Wirkungsdaten, Zustandsdaten, Systemdaten, Vorgabewerte, Steuerdaten, Sensordaten, Messwerte, Umgebungsdaten, Überwachungsdaten, Prognosedaten, Analysedaten und/oder andere im Betrieb des technischen Systems TS anfallende und/oder einen Betriebszustand des technischen Systems TS beschreibende Daten erfasst werden. Zum Beispiel Daten über Temperatur, Druck, Emissionen, Vibrationen, Schwingungszustände, Ressourcenverbrauch etc. Speziell bei einer Windturbine können die Betriebsparameter eine Windgeschwindigkeit, eine Windrichtung, eine Turbinenleistung, eine Rotationsgeschwindigkeit und/oder eine Beschleunigung der Triebwerksgondel betreffen.

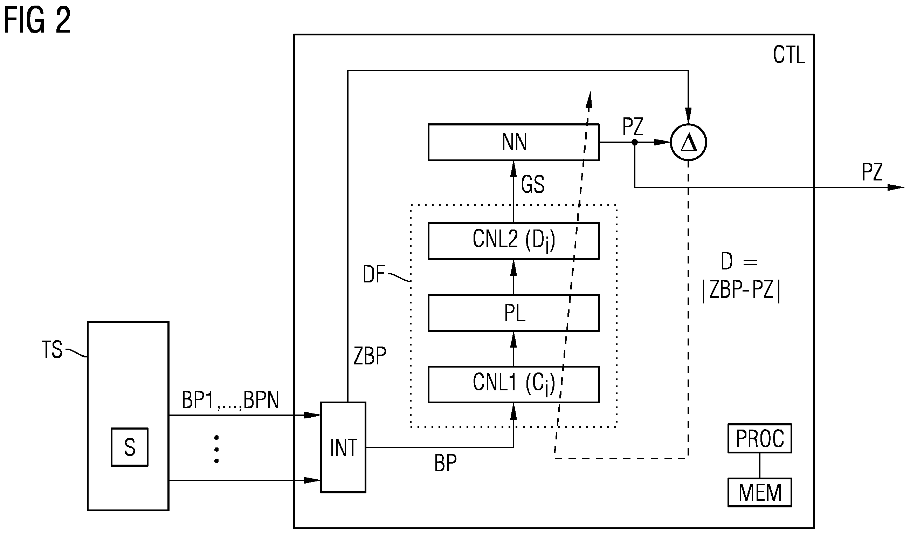

Figur 2 zeigt eine erfindungsgemäße Steuereinrichtung CTL zum Steuern eines technischen Systems TS in detaillierterer Darstellung. Die Steuereinrichtung CTL verfügt über einen oder mehrere Prozessoren PROC zum Ausführen aller Verfahrensschritte der Steuereinrichtung CTL sowie über einen oder mehrere mit dem Prozessor PROC gekoppelte Speicher MEM zum Speichern der von der Steuereinrichtung CTL zu verarbeitenden Daten.

Die Steuereinrichtung CTL ist mit dem technischen System TS gekoppelt und erfasst von diesem Werteabfolgen BP1,...,BPN einer Vielzahl von Betriebsparametern des technischen Systems TS. Die Werteabfolgen BP1 ,...,BPN werden von einer Vielzahl von Sensoren S des technischen Systems TS gemessen oder anderweitig vom technischen System TS oder anderen Einrichtungen bereitgestellt.

Die Werteabfolgen BP1,...,BPN werden einer Interpolationseinrichtung INT der Steuereinrichtung CTL zugeführt. Die Interpolationseinrichtung INP interpoliert die Werteabfolgen BP1,...,BPN jeweils auf ein gemeinsames, vorgegebenes Zeitraster und führt dabei ggf. eine betriebsparameterindividuelle Normierung der Zahlenwerte und/oder eine Einheitenumrechnung aus. Eine derartige Interpolation wird häufig als auch Resampling bezeichnet. Die auf das Zeitraster interpolierten Werteabfolgen werden durch die Interpolationseinrichtung INT zu einer zeitlichen Abfolge, das heißt zu einer Zeitreihe von Betriebsparameterwerten BP auf dem gemeinsamen Zeitraster zusammengefasst.

Die Zeitreihe der Betriebsparameterwerte BP wird fortlaufend erfasst und verarbeitet. Die Zeitpunkte des Zeitrasters können einen Abstand von beispielsweise ca. 1 Sekunde haben. In der Praxis wird zum Beispiel ein Verhalten einer Windturbine durch einen Betriebsparameterverlauf in einem Zeitfenster von der Größenordnung von einigen Minuten, typischerweise ca. 2 Minuten im Wesentlichen bestimmt. Dies bedeutet, dass bei einer Prädiktion ein oder mehrere hundert Zeitreihenpunkte jeweils für die Vielzahl von erfassten Betriebsparametern auszuwerten sind.

Als Betriebsparameter werden insbesondere auch ein oder mehrere Ziel-Betriebsparameter ZBP erfasst. Erfindungsgemäß soll die Steuereinrichtung CTL dahingehend trainiert werden, den oder die Ziel-Betriebsparameter ZBP zu prädizieren, um das technische System TS vorausschauend zu steuern. Ein jeweiliger Ziel-Betriebsparameter ZBP kann hierbei zum Beispiel eine Temperatur, eine Leistung, eine Ausbeute, einen Verschleiß, Emissionen, Vibrationen oder ein anderes Verhalten des technischen Systems TS betreffen.

Die zeitliche Abfolge der Betriebsparameterwerte BP wird durch die Interpolationseinrichtung INT einem digitalen Filter DF zugeführt und durch dieses gefiltert. Das digitale Filter DF umfasst mehrere faltende neuronale Schichten CNL1 und CNL2 sowie eine dazwischengeschaltete Pooling-Schicht PL. Die faltenden neuronalen Schichten CNL1 und CNL2 können jeweils als FIR-Filter (FIR: Finite Impulse Response) aufgefasst werden, mit dessen Filterparametern Cᵢ beziehungsweise Dᵢ jeweils eine über ein Zeitfenster gleitende Summe gewichtet wird. Durch die faltenden neuronalen Schichten CLN1 und CLN2 werden die gewichteten Summen jeweils durch eine Faltung eines jeweiligen zeitdiskreten Eingangssignals der faltenden neuronalen Schicht CNL1 beziehungsweise CNL2 mit den Filterparametern Cᵢ beziehungsweise Dᵢ gebildet. Wenn ein der faltenden neuronalen Schicht CNL1 beziehungsweise CNL2 zugeführtes Eingangssignal mit Xᵢ beziehungsweise Yᵢ bezeichnet wird, kann die jeweilige Faltung als Fₙ = Σᵢ Cᵢ·Xₙ₋ᵢ beziehungsweise Gₙ = Σᵢ Dᵢ·Yₙ₋ᵢ dargestellt werden, wobei der Summenindex i die endliche Anzahl der jeweiligen Filterparameter durchläuft. Die Faltungen Fₙ und Gₙ werden mit fortlaufendem Index n fortlaufend berechnet und von der jeweils faltenden neuronalen Schicht CNL1 beziehungsweise CNL2 ausgegeben. Derartige Filterparameter Cᵢ und Dᵢ werden häufig auch als Faltungsgewichte oder Filterkern bezeichnet.

Die Pooling-Schicht PL ist im vorliegenden Ausführungsbeispiel zwischen die faltenden neuronalen Schichten CNL1 und CNL2 geschaltet. Die Pooling-Schicht PL dient zur Aggregation von zugeführten Daten, zur Datenreduktion und/oder zur Redundanzreduktion. Die Pooling-Schicht PL soll vorzugsweise spezifisch diejenigen Daten aus den Ausgabedaten Fₙ der faltenden neuronalen Schicht CNL1 extrahieren, bei denen die faltende neuronale Schicht CNL1 gewissermaßen eine besonders starke Reaktion zeigt.

Zum Filtern der Abfolge der Betriebsparameterwerte BP werden diese der Eingangsschicht CNL1 des digitalen Filters DF zugeführt, die die Abfolge der Betriebsparameterwerte BP, das heißt nach obiger Notation die Abfolge der Xᵢ mit den Filterparametern Cᵢ faltet. Die gefalteten Betriebsparameter Fₙ werden durch die faltende neuronale Schicht CNL1 der Pooling-Schicht PL zugeführt, durch die Pooling-Schicht PL aggregiert und reduziert und das Reduktionsergebnis, hier Yᵢ, der faltenden neuronalen Schicht CNL2 zugeführt. Das Reduktionsergebnis Yᵢ wird durch die faltende neuronale Schicht CNL2 mit den Filterparametern Dᵢ gefaltet. Als Ergebnis dieser zweiten Faltung wird durch die faltende neuronale Schicht CNL2 eine zeitdiskrete Abfolge gefilterter Signalwerte GS ausgegeben.

Erfindungsgemäß wird angestrebt, dass die Abfolge gefilterter Signalwerte GS möglich spezifisch diejenigen Merkmale, Muster oder Korrelationen der Abfolge der Betriebsparameterwerte BP enthält oder angibt, die für eine gute Prädiktion des Ziel-Betriebsparameters BP relevant sind. Auf dem Fachgebiet des maschinellen Lernens werden solche Merkmale, Muster oder Korrelationen auch als Features und deren Ermittlung als Feature-Extraktion bezeichnet.

Die vorstehend beschriebene Schichtfolge des digitalen Filters implementiert ein faltendes neuronales Netz, das die Zeitreihe der Betriebsparameterwerte BP fortlaufend in die Abfolge gefilterter Signalwerte GS umsetzt. Vorzugsweise kann im Rahmen einer Deep-Learning-Architektur auch eine größere Anzahl von hintereinandergeschalteten faltenden neuronalen Schichten vorgesehen sein.

Die Abfolge gefilterter Signalwerte GS wird durch das digitale Filter DF einer datengetriebenen maschinellen Lernroutine zugeführt, die im vorliegenden Ausführungsbeispiel durch ein neuronales Netz NN implementiert ist. Das neuronale Netz NN kann zum Beispiel mehrere MLP-Schichten umfassen (MLP: Multi Layer Perceptron). Das neuronale Netz kann insbesondere eine Deep-Learning-Architektur aufweisen.

Das neuronale Netz NN ist datengetrieben trainierbar beziehungsweise lernfähig und weist eine Trainingsstruktur auf, die sich während eines Trainings ausbildet.

Unter einem Training sei allgemein eine Optimierung einer Abbildung von Eingangsparametern eines parametrisierten Systemmodells, zum Beispiel eines neuronalen Netzes, auf eines oder mehrere Zielparameter verstanden. Diese Abbildung wird nach vorgegebenen, gelernten und/oder zu lernenden Kriterien während einer Trainingsphase optimiert. Als Kriterien können insbesondere bei Prädiktionsmodellen ein Prädiktionsfehler, ein Klassifikationsfehler, ein Analysefehler und/oder ein Simulationsfehler oder komplementär dazu, eine Prädiktionsgüte, eine Klassifikationsgüte, eine Analysegüte und/oder eine Simulationsgüte herangezogen werden. Darüber hinaus können eine Performanz, ein Ressourcenverbrauch, einer Ausbeute und/oder ein Verschleiß des technischen Systems TS als Kriterien vorgesehen sein. Eine Trainingsstruktur kann zum Beispiel eine Vernetzungsstruktur von Neuronen eines neuronalen Netzes und/oder Gewichte von Verbindungen zwischen den Neuronen umfassen, die durch das Training so ausgebildet werden, dass die vorgegebenen Kriterien möglichst gut erfüllt werden.

Erfindungsgemäß wird angestrebt, dass das neuronale Netz NN aus der Abfolge gefilterter Signalwerte GS einen möglichst guten Prädiktionswert PZ für den Ziel-Betriebsparameter ZBP ermittelt. Zu diesem Zweck werden die vom neuronalen Netz NN als Prädiktionswert PZ ausgegebenen Werte mit dazu zeitlich korrespondierenden, tatsächlich erfassten Werten des Ziel-Betriebsparameters ZBP verglichen, die von der Interpolationseinrichtung INT bereitgestellt werden. Hierbei ist ein jeweiliger, auf einen Zeitpunkt bezogener Prädiktionswert PZ so lange zwischenzuspeichern, bis der jeweilige auf denselben Zeitpunkt bezogene Wert des Ziel-Betriebsparameters ZBP tatsächlich erfasst und verfügbar ist.

Im Rahmen des Vergleichs wird ein Abstand D zwischen den prädizierten Werten PZ des Ziel-Betriebsparameters ZBP und den zeitlich korrespondierenden, tatsächlich erfassten Wertes des Ziel-Betriebsparameters ZBP gebildet. Der Abstand D repräsentiert einen Prädiktionsfehler der Kombination aus dem digitalem Filter DF und dem neuronalen Netz NN.

Vorzugsweise wird als Abstand D ein statistischer Mittelwert von Einzelabständen, jeweils zwischen einem Prädiktionswert PZ und einem zeitlich korrespondierenden, tatsächlich erfassten Wert des Ziel-Betriebsparameters ZBP über ein vorgegebenes Zeitfenster, zum Beispiel als gleitender Durchschnitt gebildet. Auf diese Weise können stochastische, das heißt nicht deterministische Einflüsse auf den Prädiktionswert besser verarbeitet werden.

Der Abstand D wird sowohl zum digitalen Filter DF als auch zum neuronalen Netz NN zurückgeführt. Anhand des zurückgeführten Abstands D werden das digitale Filter DF, das heißt die faltenden neuronalen Schichten CNL1 und CNL2 und die Pooling-Schicht PL, sowie das neuronale Netz NN - wie durch einen strichlierten Pfeil angedeutet - gemeinsam darauf trainiert, den Abstand D zu minimieren, das heißt den Ziel-Betriebsparameter ZBP durch den Prädiktionswert PZ im statistischen Mittel möglichst gut zu prädizieren. Hierbei werden die faltenden neuronalen Schichten CNL1 und CNL2 durch Variation ihrer Filterparameter Cᵢ und Dᵢ und das neuronale Netz NN durch Variation seiner Trainingsstruktur trainiert.

Somit wird einerseits das digitalte Filter DF darauf trainiert, dass die Abfolge gefilterter Signalwerte GS möglichst spezifisch diejenigen Features der Abfolge der Betriebsparameterwerte BP enthält, die für eine gute Prädiktion des Ziel-Betriebsparameters ZBP relevant sind. Andererseits wird das neuronale Netz NN in paralleler Weise darauf trainiert, funktionale Korrelationen zwischen der Abfolge gefilterter Signalwerte GS und dem Ziel-Betriebsparameter ZBP zu erkennen und mithin einen verhältnismäßig genauen Prädiktionswert PZ zu ermitteln.

Zum Training des digitalen Filters DF und des neuronalen Netzes NN kann eine Vielzahl von Standard-Trainingsverfahren für neuronale Netze, insbesondere des überwachten Lernens eingesetzt werden. Der zu minimierende Abstand D kann dabei durch eine geeignete Kostenfunktion repräsentiert werden. Zur Minimierung des Abstandes kann zum Beispiel eine Gradientenabstiegsmethode verwendet werden.

Ein faltendes neuronales Netz lässt sich im Unterschied zu einem rekurrenten neuronalen Netz auch für verhältnismäßig lange Zeitreihen effizient trainieren. Zudem eignet sich ein faltendes neuronales Netz gut dazu, in Zeitreihen auftretende Korrelationen zeitlich nahe beieinanderliegender Werte zu erkennen und zu extrahieren. Durch das nachgeschaltete neuronale Netz NN werden die erkannten Korrelationen dann gewissermaßen hinsichtlich des Ziel-Betriebsparameters ZBP klassifiziert. Durch die Kombination eines faltenden neuronalen Netzes, hier DF, und einem nachgeschalteten neuronalen Netz, hier NN, können auch komplexe Korrelationen in Betriebsparameter-Zeitreihen verhältnismäßig genau erkannt werden und zur Prädiktion genutzt werden. Dies gilt insbesondere auch für unterschiedliche Betriebszustände des technischen Systems TS.

Es erweist sich, dass nach erfolgtem Training des digitalen Filters DF und des neuronalen Netzes NN der aus der Abfolge der Betriebsparameterwerte BP abgeleitete Prädiktionswert PZ einen sehr geringen Prädiktionsfehler aufweist. Der Prädiktionswert PZ kann somit in vorteilhafter Weise zum vorausschauenden und präzisen Steuern des technischen Systems TS, zur Überwachung des technischen Systems TS, zur vorzeitigen Beschädigungserkennung, zur Prognose eines Ressourcenbedarfs und/oder für andere vorausschauende Steuermaßnahmen verwendet werden. Der Prädiktionswert PZ wird zu diesem Zweck von der Steuereinrichtung CTL ausgegeben. Insbesondere können durch die Steuereinrichtung CTL anhand des Prädiktionswertes PZ zweckmäßige und vorzugsweise optimierte Steuerdaten abgeleitet und zum Steuern des technischen Systems TS an dieses übermittelt werden.

## Patentansprüche

1. Verfahren zum Steuern eines technischen Systems (TS), wobei
a) eine zeitliche Abfolge von Betriebsparameterwerten (BP) des technischen Systems (TS) fortlaufend erfasst wird,
b) die Abfolge der Betriebsparameterwerte (BP) durch ein trainierbares digitales Filter (DF) fortlaufend in eine Abfolge von gefilterten Signalwerten (GS) umgesetzt wird,
c) die Abfolge der gefilterten Signalwerte (GS) einer maschinellen Lernroutine (NN) zugeführt wird, die daraus Prädiktionswerte (PZ) für einen Ziel-Betriebsparameter (ZBP) ableitet,
d) das digitale Filter (DF) sowie die maschinelle Lernroutine (NN) darauf trainiert werden, einen Abstand (D) zwischen abgeleiteten Prädiktionswerten (PZ) und dazu zeitlich korrespondierenden, tatsächlich erfassten Werten des Ziel-Betriebsparameters (ZBP) zu verringern, und
e) die Prädiktionswerte (PZ) zum Steuern des technischen Systems (TS) ausgegeben werden,
und wobei
zum Erfassen der Abfolge der Betriebsparameterwerte (BP)
- Werteabfolgen mehrerer Betriebsparameter erfasst werden,
- die Werteabfolgen jeweils auf ein gemeinsames, vorgegebenes Zeitraster interpoliert werden, und
- die auf das Zeitraster interpolierten Werteabfolgen zur Abfolge der Betriebsparameterwerte (BP) zusammengefasst werden,
und wobei
die Umsetzung durch das digitale Filter (DF) abhängig von Filterparametern (Cᵢ, Dᵢ) erfolgt, die durch das Training des digitalen Filters (DF) derart modifiziert werden, dass der Abstand (D) verringert wird, und
bei der Umsetzung der Abfolge der Betriebsparameterwerte (BP) gleitende, durch Filterparameter (Cᵢ, Dᵢ) gewichtete Summen der Betriebsparameterwerte über ein Zeitfenster gebildet werden,
und wobei
das Zeitfenster und seine Länge im Zuge des Trainings modifiziert werden.

2. Verfahren nach Anspruch 1, **dadurch gekennzeichnet,**
**dass** die maschinelle Lernroutine (NN) und/oder das digitale Filter (DF) ein künstliches neuronales Netz, ein rekurrentes neuronales Netz, ein faltendes neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum umfasst.

3. Verfahren nach einem der vorhergehenden Ansprüche, **dadurch gekennzeichnet,**
**dass** das digitale Filter (DF) und die maschinelle Lernroutine (NN) gemeinsam trainiert werden.

4. Verfahren nach einem der vorhergehenden Ansprüche, **dadurch gekennzeichnet,**
**dass** die gewichteten Summen durch eine Faltung der Abfolge der Betriebsparameterwerte (BP) mit einer Abfolge der Filterparameter (Cᵢ, Dᵢ) und/oder durch ein gleitendes Skalarprodukt einer Abfolge der Betriebsparameterwerte (BP) mit der Abfolge der Filterparameter (Cᵢ, Dᵢ) gebildet werden.

5. Verfahren nach einem der vorhergehenden Ansprüche, **dadurch gekennzeichnet,**
**dass** das digitale Filter (DF) eine oder mehrere faltende neuronale Schichten (CNL1, CNL2) und/oder eine Pooling-Schicht (PL) zum Filtern der Abfolge der Betriebsparameterwerte (BP) aufweist.

6. Verfahren nach einem der vorhergehenden Ansprüche, **dadurch gekennzeichnet, dass**
als Abstand (D) ein statistischer Mittelwert von Einzelabständen jeweils zwischen einem Prädiktionswert (PZ) und einem zeitlich dazu korrespondierenden, tatsächlich erfassten Wert des Ziel-Betriebsparameters (ZBP) verwendet wird.

7. Verfahren nach einem der vorhergehenden Ansprüche, **dadurch gekennzeichnet, dass**
zum Erfassen der Abfolge der Betriebsparameterwerte (BP) gespeicherte, früher erfasste Betriebsparameter und/oder ein gespeicherter, früher erfasster Ziel-Betriebsparameter erfasst werden.

8. Steuereinrichtung (CTL) zum Steuern eines technischen Systems (TS) eingerichtet zum Ausführen eines Verfahrens nach einem der vorhergehenden Ansprüche.

9. Computerprogrammprodukt eingerichtet zum Ausführen eines Verfahrens nach einem der Ansprüche 1 bis 7.

10. Computerlesbares Speichermedium mit einem Computerprogrammprodukt nach Anspruch 9.

## Claims

1. Method for controlling a technical system (TS), wherein
a) a temporal sequence of operating parameter values (BP) of the technical system (TS) is continuously recorded,
b) the sequence of operating parameter values (BP) is continuously converted into a sequence of filtered signal values (GS) by a trainable digital filter (DF),
c) the sequence of filtered signal values (GS) is fed to a machine learning routine (NN), which derives from it prediction values (PZ) for a target operating parameter (ZBP),
d) the digital filter (DF) and also the machine learning routine (NN) are trained to reduce a disparity (D) between derived prediction values (PZ) and temporally corresponding actually recorded values of the target operating parameter (ZBP), and
e) the prediction values (PZ) for controlling the technical system (TS) are output,
and wherein
for recording the sequence of operating parameter values (BP),
- sequences of values of a number of operating parameters are recorded,
- the sequences of values are respectively interpolated to a common, specified time frame, and
- the sequences of values interpolated to the time frame are combined to form the sequence of operating parameter values (BP),
and wherein
the conversion by the digital filter (DF) is based on filter parameters (Cᵢ, Dᵢ) that are modified by the training of the digital filter (DF) in such a way that the disparity (D) is reduced, and
in the conversion of the sequence of operating parameter values (BP), moving totals of the operating parameter values that are weighted by filter parameters (Cᵢ, Dᵢ) are formed over a time window,
and wherein
the time window and its length are modified in the course of the training.

2. Method according to Claim 1, **characterized**
**in that** the machine learning routine (NN) and/or the digital filter (DF) comprises an artificial neural network, a recurrent neural network, a convolutional neural network, an autoencoder, a deep learning architecture, a support vector machine, a data-driven trainable regression model, a k-nearest-neighbour classifier, a physical model and/or a decision tree.

3. Method according to either of the preceding claims, **characterized**
**in that** the digital filter (DF) and the machine learning routine (NN) are trained together.

4. Method according to one of the preceding claims, **characterized**
**in that** the weighted totals are formed by a convolution of the sequence of operating parameter values (BP) with a sequence of filter parameters (Cᵢ, Dᵢ) and/or by a moving scalar product of a sequence of operating parameter values (BP) with the sequence of filter parameters (Cᵢ, Dᵢ) .

5. Method according to one of the preceding claims, **characterized**
**in that** the digital filter (DF) comprises one or more convolutional neural layers (CNL1, CNL2) and/or a pooling layer (PL) for filtering the sequence of operating parameter values (BP) .

6. Method according to one of the preceding claims, **characterized in that**
a statistical average value of individual disparities respectively between a prediction value (PZ) and a temporally corresponding actually recorded value of the target operating parameter (ZBP) is used as the disparity (D).

7. Method according to one of the preceding claims, **characterized in that**
for recording the sequence of operating parameter values (BP), stored operating parameters recorded earlier and/or a stored target operating parameter recorded earlier are recorded.

8. Control device (CTL) for controlling a technical system (TS) designed for executing a method according to one of the preceding claims.

9. Computer program product designed for executing a method according to one of Claims 1 to 7.

10. Computer-readable storage medium with a computer program product according to Claim 9.

## Revendications

1. Procédé permettant de commander un système technique (TS), dans lequel :
a) une séquence temporelle de valeurs de paramètre de service (BP) du système technique (TS) est captée en continu,
b) la séquence des valeurs de paramètre de service (BP) est convertie en continu par un filtre numérique entraînable (DF) en une séquence de valeurs de signal filtrées (GS),
c) la séquence des valeurs de signal filtrées (GS) est amenée à une routine d'apprentissage machine (NN), qui en dérive des valeurs de prédiction (PZ) pour un paramètre de service cible (ZBP),
d) le filtre numérique (DF) et la routine d'apprentissage machine (NN) subit un entraînement en vue de réduire une distance (D) entre des valeurs de prédiction dérivées (PZ) et des valeurs y correspondant de manière temporelle, effectivement captées, du paramètre de service cible (ZBP), et
e) les valeurs de prédiction (PZ) sont émises afin de commander le système technique (TS),
et dans lequel
afin de capter la séquence des valeurs de paramètre de service (BP)
- des séquences de valeurs de plusieurs paramètres de service sont captées,
- les séquences de valeurs sont respectivement interpolées sur une grille de temps commune, et
- les séquences de valeurs interpolées sur la grille de temps sont regroupées en la séquence des valeurs de paramètre de service (BP),
et dans lequel
la conversion par le filtre numérique (DF) se fait en fonction de paramètres de filtre (Cᵢ, Dᵢ) modifiés par l'entraînement du filtre numérique (DF) de manière à réduire la distance (D), et
lors de la conversion de la séquence des valeurs de paramètre de service (BP), des sommes des valeurs de paramètre de service, mobiles et pondérées par les paramètres de filtre (Cᵢ, Dᵢ), sont formées sur une fenêtre temporelle,
et dans lequel
la fenêtre temporelle et sa longueur peuvent être modifiées au cours de l'entraînement.

2. Procédé selon la revendication 1, **caractérisé en ce que** la routine d'apprentissage machine (NN) et/ou le filtre numérique (DF) comprennent un réseau neuronal artificiel, un réseau neuronal récurrent, un réseau neuronal convolutif, un encodeur automatique, une architecture d'apprentissage profond, une machine de support vectoriel, un modèle de régression entraînable fonctionnant basé sur des données, un classificateur de k voisins les plus proches, un modèle physique et/ou un arbre de décision.

3. Procédé selon l'une quelconque des revendications précédentes, **caractérisé en ce que**,
le filtre numérique (DF) et la routine d'apprentissage machine (NN) sont entraînés ensemble.

4. Procédé selon l'une quelconque des revendications précédentes, **caractérisé en ce que**,
les sommes pondérées sont formées par une convolution de la séquence des valeurs de paramètres de service (BP) avec une séquence des paramètres de filtre (Cᵢ, Dᵢ) et/ou par un produit scalaire mobile d'une séquence des valeurs de paramètre de service (BP) avec la séquence des paramètres de filtre (Cᵢ, Dᵢ).

5. Procédé selon l'une quelconque des revendications précédentes, **caractérisé en ce que**,
le filtre numérique (DF) comporte une ou plusieurs couches neuronales convolutives (CNL1, CNL2) et/ou une couche de pooling (PL) permettant de filtrer la séquence des valeurs de paramètre de service (BP).

6. Procédé selon l'une quelconque des revendications précédentes, **caractérisé en ce qu'**est utilisée,
en tant que distance (D), une valeur moyenne statistique de distances individuelles entre une valeur de prédiction (PZ) et une valeur y correspondant de manière temporelle, effectivement captée, du paramètre de service cible (ZBP).

7. Procédé selon l'une quelconque des revendications précédentes, **caractérisé en ce que**,
afin de capter la séquence des valeurs de paramètres de service (BP), des paramètres de service sauvegardés captés de manière antérieure et/ou un paramètre de service cible sauvegardé capté de manière antérieure.

8. Dispositif de commande (CTL) permettant de commander un système technique (TS), configuré afin d'exécuter un procédé selon l'une des revendications précédentes.

9. Produit de programme informatique configuré afin d'exécuter un procédé selon l'une des revendications 1 à 7.

10. Support de stockage lisible par ordinateur avec un produit de programme informatique selon la revendication 9.
